Europäisches Patentamt

European Patent Office

Office européen des brevets

(19)

(11) Publication number: **0 133 319 B1**

## (12) EUROPEAN PATENT SPECIFICATION

(45) Date of publication of patent specification: **16.10.91**   (51) Int. Cl.⁵: **G03B 27/72**, G03G 15/052

(21) Application number: **84108994.9**

(22) Date of filing: **30.07.84**

(54) **Automatic exposure device.**

(30) Priority: **30.07.83 JP 139962/83**

(43) Date of publication of application:
**20.02.85 Bulletin 85/08**

(45) Publication of the grant of the patent:
**16.10.91 Bulletin 91/42**

(84) Designated Contracting States:
**DE FR GB NL**

(56) References cited:
**EP-A- 0 092 038         DE-A- 2 600 933**
**DE-A- 2 635 112         DE-A- 3 014 071**
**US-A- 4 124 295         US-A- 4 390 266**

(73) Proprietor: **MITA INDUSTRIAL CO., LTD.**
**2-28, 1-chome, Tamatsukuri Chuo-ku**
**Osaka 540(JP)**

(72) Inventor: **Yoichiro, Irie**
**29-3, Aoyamadai 4-chome, Suita-shi**
**Osaka(JP)**
Inventor: **Yutaka, Shigemura**
**15-13, Takatsukasa 2-chome**
**Takarazuka-shi, Hyogo(JP)**
Inventor: **Satoshi, Namba**
**3-505, Sojijidai, Ibaraki-shi**
**Osaka(JP)**

(74) Representative: **Sajda, Wolf E., Dipl.-Phys. et**
**al**
**MEISSNER, BOLTE & PARTNER Widenmayer-**
**strasse 48 Postfach 86 06 24**
**W-8000 München 86(DE)**

## Description

The invention relates to an automatic exposure device, comprising: a document platen, for supporting a document, and an exposure lamp moving relatively to each other; a document density detector for detecting light emitted by the exposure lamp and reflected from a detecting region of the document, which detecting region is spaced from an exposure region of the document by a distance corresponding to the relative movement within the response time of the exposure lamp; and a lamp controller the operation of which is dependent on the detected document density (US-A-4 378 153).

In an electrostatic copying machine, which is a kind of image forming apparatus, there is the necessity of obtaining copies having an optimum image quality with respect to a wide variety of documents to be copied. Therefore, it has been common practise for the operator to visually estimate the density of a document and to manipulate accordingly a density adjusting knob installed on an operating section so as to change and adjust the exposure.

However, the above method relying on the operator's visual estimation is inefficient and such a visual estimation varies with the individual, thus bringing forth the problem that copies having an optimum image quality cannot always be obtained.

Therefore, in recent years there has been employed a system for detecting the intensity of light reflected from a document and automatically control the exposure for the document by the resulting detection signal.

An electrostatic copying machine using such a system has a detecting element adapted to detect the intensity of the light reflected from a document irradiated by an exposure lamp, and the position on the document at which the reflected light intensity is detected by the detecting element is located at a position spaced by an amount corresponding to the distance traveled by the document or the exposure lamp during the rise response time of the exposure lamp to be controlled, that is, at a position upstream of the exposure region of the document as viewed in the direction of travel of the document (a position downstream as viewed in the direction of travel of the exposure lamp). The voltage applied on the exposure lamp is controlled by the quantity of light (reflected light) received by the detecting element.

In such a system, however, when reading the document density, the quantity of light of the exposure lamp, which should originally be maintained constant, is varied in accordance with the output of the detecting element receiving the reflected light from the document, the following problem arises.

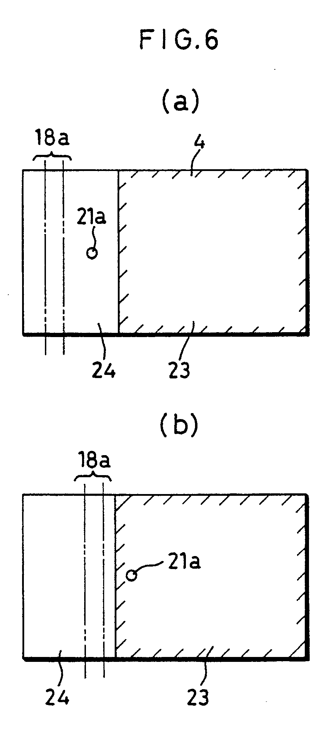

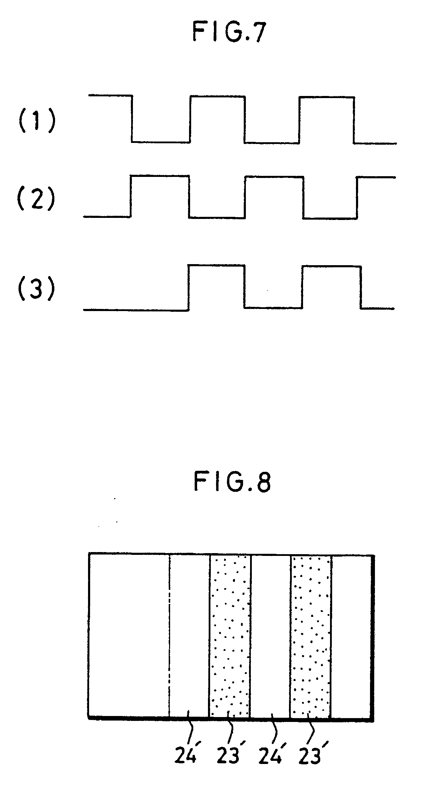

For example, suppose a case where a document 4 having a high density region 23 and a low density region 24 is to be copied, as shown in Fig. 6. In addition, the corresponding position on the document 4 being detected by the detecting element is shown by the reference character 21a, while the position corresponding to the exposure region of the document 4 is shown by the reference character 18a. First, in the state of the document 4 taking the position of Fig. 6(a) as a result of the exposure movement, the quantity of light incident on the detecting element, corresponding to the low density region 24 of the document 4, is high, as shown in Fig. 7(1). Therefore the voltage to be applied to the exposure lamp is controlled to be low, as shown in Fig. 7(2), and hence the output light quantity of the exposure lamp is also small, as shown in Fig. 7(3). Next, in the state of the document 4 moved to the position of Fig. 6(b), the quantity of light incident on the detecting element is small corresponding to the density of the high density region 23 of the document 4, so that the lamp voltage is controlled to be high. However, the output light quantity of the exposure lamp lags in response by an amount corresponding to the rise time. As the light quantity of the exposure lamp increases, so does the quantity of light incident on the detecting element, so that the lamp voltage is controlled to be low. When the lamp voltage is controlled to be low, the output light quantity of the lamp is also controlled to be low, but there is a fall time which lasts for the same period as the rise time. Thus, because of a lag in response between the detecting element and the exposure lamp due to the rise and fall times of the latter, the copy of the document 4, as shown in Fig. 8, is striped with alternating high and low density regions 23' and 24' corresponding to the changes in the output light quantity of the exposure lamp shown in Fig. 7-(3). In addition, the quantity of light incident on the detecting element and the output light quantity of the exposure lamp, whose actual changes are analog, are represented in simplified form in Fig. 7 for convenience' sake.

As an approach to such a problem, it may easily be conceived to radiate light of predetermined quantity, separately from the exposure lamp, toward the document 4, to receive the reflected light by a light detecting element to detect the density of the document to thereby control the power of the exposure lamp. With such an arrangement, however, it would be necessary to protect the detecting element from the influence of the light from the exposure lamp. In such a case it would be unavoidable to arrange the detecting element so that it detects the density of a portion of the document which is sufficiently spaced from the region of the document which is exposed to the light emitted by exposure lamp. Otherwise it would be impossible to control the power of the exposure lamp accurately in accordance with the density of the document.

From document US-A-4 124 295 a background brightness control for document copier is known wherein photodetectors sense the light reflected from the scanned portions of the document to provide signals indicating the reflectance of the scanned portions. A signal-processing circuit is responsive to the reflectance signals and generates a background brightness control signal representing the maximum reflectance sensed by any of the detectors.

In such a prior art control, the background brightness control signal regulates the intensity of the exposure lamp of the copier when the document reaches the imaging platen. Also, it is possible that the background brightness control signal regulates the width of an optical slit disposed adjacent to the photosensitive surface. Alternatively, the background brightness control signal regulates the effective aperture of the focussing lens. However, no compensation is effected taking into account both the quantity of light emitted by the exposure lamp and the quantity of light reflected from the document a copy of which is desired.

The object underlying the present invention is to provide a novel automatic exposure device, especially for use with an image forming apparatus, which ensures that the background of any document image is kept in a clear state free from fogs and fringes, irrespective of the degree of density of the background of a document to be exposed, in order to improve the quality of images.

According to a first aspect of the invention, the problem is solved in that a lamp light quantity detector detects the quantity of light emitted by the exposure lamp; a reference signal generator uses as a first input signal the output signal of the lamp light quantity detector and outputs a reference signal; a correcting means uses as a first input signal the reference signal and as a second input signal the signal produced by the document density detector; and the output signal of the correcting means controls the conducting time of a lamp supply power switching device provided in the lamp controller.

A specific embodiment of the automatic exposure device according to the invention is characterized in that the reference signal of the reference signal generator increases when the lamp light quantity detector detects a smaller amount of light emitted by the exposure lamp; in that the signal produced by the document density detector increases when the document density detector detects a smaller amount of light reflected from the document; and in that the correcting means delivers an output signal based upon the difference between its first and second input signals from the reference signal generator and the document density detector, respectively.

A further development of the device according to the invention is characterized in that the reference signal of the reference signal generator decreases when the lamp light quantity detector detects a larger amount of light emitted by the exposure lamp; in that the signal produced by the document density detector decreases when the document density detector detects a larger amount of light reflected from the document; and in that the correcting means delivers an output signal based upon the difference between its first and second input signals from the reference signal generator and the document density detector, respectively.

According to a second aspect of the invention, the problem is solved in that a control signal is generated, which is sampled at a time in advance of the time when the document density is detected, by an amount corresponding to the lamp response time; wherein the control signal is representative of the quantity of light emitted by the exposure lamp at the time when the document density is detected; a reference signal generator uses as a first input signal the control signal and outputs a reference signal; a correcting means uses as a first input signal the reference signal and as a second input signal the signal produced by the document density detector; and the output signal of the correcting means controls the conducting time of a lamp supply power switching device provided in the lamp controller.

According to a further development of the devices according to the invention the reference signal generator uses as a second input signal a preset signal and delivers as a reference signal a signal based upon the difference between its first and second input signals.

According to a further development of the devices according to the invention, the correcting means delivers a signal based upon the difference between its first and second input signals.

A specific embodiment according to the invention is characterized in that an RMS value detecting circuit is provided using as a first input signal a rectified power signal which is dependent on the AC voltage supplied to the exposure lamp, and as a second input signal the output signal of the correcting means, and in that the output signal of the RMS value detecting circuit controls the conducting time of the lamp supply power switching device.

A further development of the device according to the second aspect of the invention is characterized in that the first input of the reference signal generator is connected to a delaying circuit receiving the control signal.

The invention will be described in detail below in connection with specific embodiments and with reference to the accompanying drawings exemplifying such specific embodiments. In the drawings

Fig. 1 is a schematic sectional view of an electrostatic copying machine forming the basis of the present invention;

Fig. 2 is a block diagram of an automatic exposure device;

Fig. 3 is an electric circuit diagram illustrating an embodiment of an automatic exposure device;

Fig. 4 is a waveform diagram for explaining the operation of the embodiment shown in Fig. 3;

Fig. 5 is an electric circuit diagram showing another embodiment of the invention;

Fig. 6 is a plan view of a document for explaining the operation of the prior art;

Fig. 7 is a waveform diagram for explaining the operation of the prior art; and

Fig. 8 is a plan view of the document for explaining the operation of the prior art.

## DESCRIPTION OF THE PREFERRED EMBODIMENTS

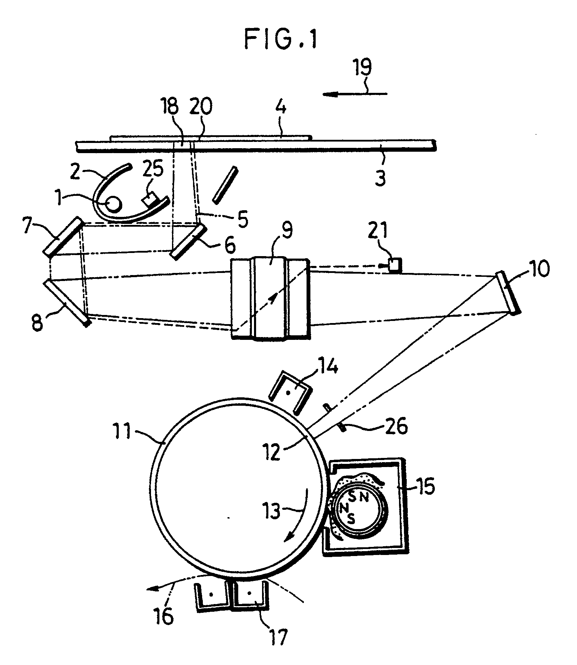

Fig. 1 is a schematic sectional view of an electrostatic copying machine forming the basis of the invention and having an automatic exposure device incorporated therein, illustrating the type adapted to reciprocate a transparent platen which supports a document. An exposure lamp 1 is provided with a reflecting mirror 2, and the light emitted by the exposure lamp 1 is transmitted through a transparent platen 3 to irradiate a document 4 placed on the transparent platen 3. Thus, a document image is reflected by reflecting mirrors 6, 7, and 8 to pass through a lens 9 and is reflected again by a reflecting mirror 10 and is finally formed on an exposure region 12 of a photoreceptor drum 11. The photoreceptor drum 11 is rotatively driven in the direction of an arrow 13, is electrically charged upstream of the exposure retion 12 by a corona discharger 14, and is exposed to the light at the exposure region 12, the electrostatic latent image formed by this exposure being visualized into a toner image by a magnetic brush development device 15 and transferred by the action of a transfer corona discharger 17 onto a copying paper sheet which travels through the path for the copying paper sheet. The toner image transferred onto the copying paper sheet is fixed by a subsequent fixing device. In this way a copying operation for the document 4 is performed. The region of the document 4 whose image is being formed on the exposure region 12 of the photoreceptor drum 11 is denoted by the reference character 18.

An arrangement for an automatic exposure comprises a first detecting element 25 disposed at a predetermined position in the reflecting mirror 2 for directly receiving the light from the exposure lamp 1 to detect the light quantity, a second detecting element 21 disposed at a predetermined position downstream of the lens 9 with respect to an optical path 5 for receiving the reflected light from a position 20 which is spaced forwardly, i.e., downstream from the exposure region 18 of the document 4 as viewed in the direction of movement of the transparent platen 3 by a distance to be traveled by the transparent platen 3 during the rise response time of the exposure lamp 1, and a slit member 26 disposed between the reflecting mirror 10 and the exposure region 12 of the photoreceptor drum 11 for guiding only the reflected light from the position 18 to the exposure region 12.

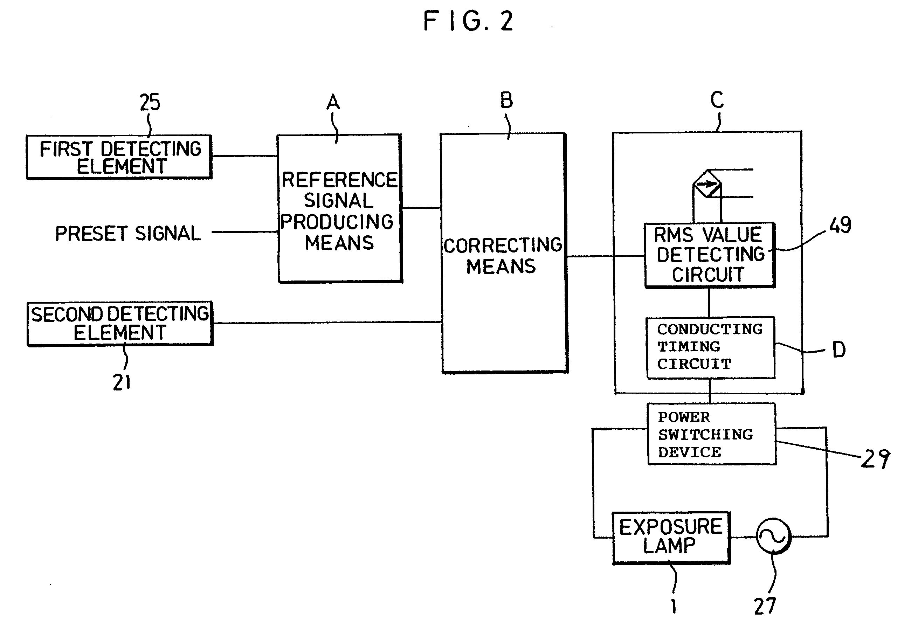

Fig. 2 is a block diagram of the automatic exposure device of the present invention.

It comprises a reference signal producing means or generator A using as its input signals the output signal from the first detecting element 25 serving as lamp light quantity detecting means and a preset signal; correcting means B using as its input signals a reference signal and the output signal from the second detecting element 21 serving as a document density detecting means; lamp control means C using as its input signal the output signal from the correcting means B; and the exposure lamp 1 which is controlled by the lamp control means C through a conducting timing circuit D and a power switching device 29 explained below.

The lamp control means C comprises an RMS (root mean square) value detecting circuit 49 using as its input signals the rectified output voltage of an AC source and the output signal from the correcting means B, a conducting timing circuit D using as its input the output signal from said RMS value detecting circuit 49, and a power switching device 29 adapted to operate with the conducting time of the conducting timing circuit D.

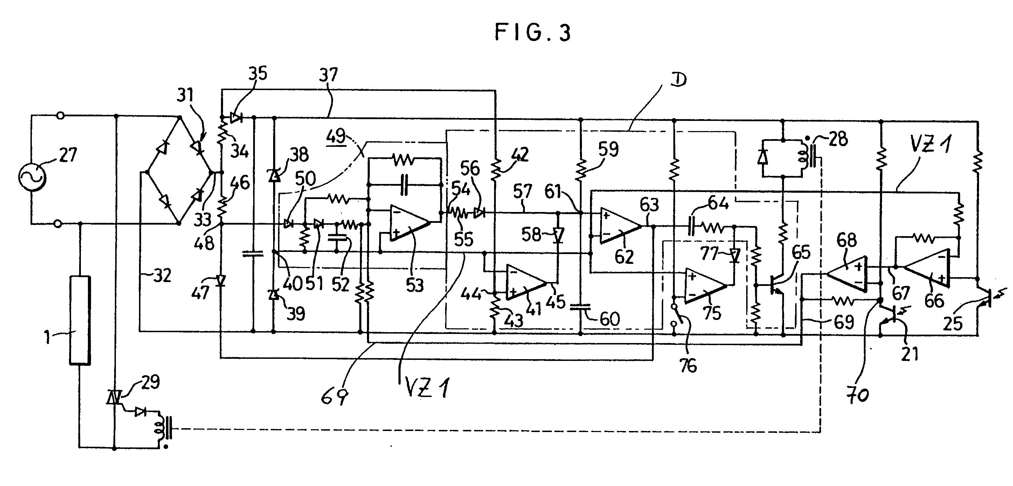

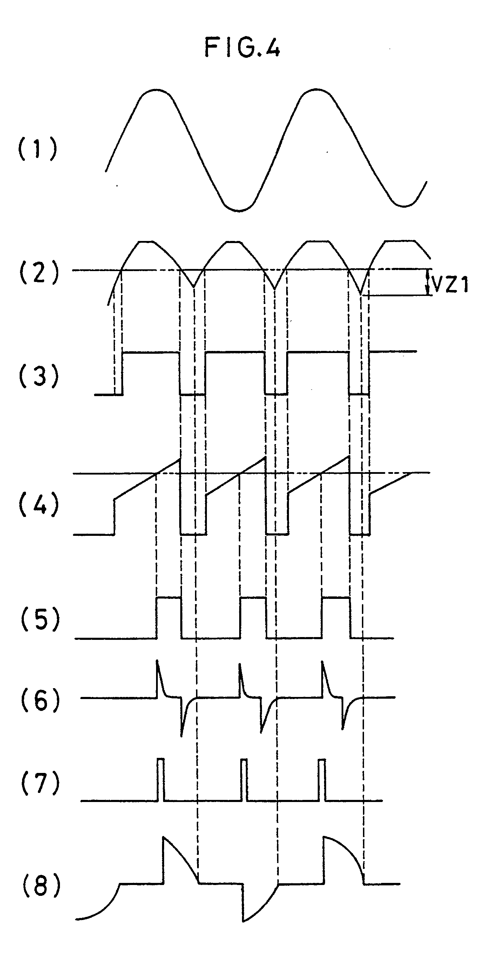

Fig. 3 is an electric circuit diagram of an embodiment of the invention. The output light quantity of the exposure lamp 1 is detected by the first detecting element 25 (see Fig. 1) disposed closely adjacent to the exposure lamp 1. The AC power from a commercial AC source 27 is controlled in its conducting time through a triac forming a power switching device 29 adapted to be fired by a pulse from a pulse transformer 28. The waveform of this AC voltage is as shown in Fig. 4(1). A full-wave rectifier circuit 31 full-wave-rectifies the output from the AC source 27 and feeds its output signal between lines 32 and 33. The output from the lines 32,33 is fed to a line 37 through a resistor 34 and a diode 35. Reverse-polarity-connected in series between the lines 32 and 37 are zener diodes 38 and 39, and the output at their connecting point 40 is given to one input of a comparator circuit 41. The voltage from the full-wave rectifier circuit 31 via the line 33 and resistor 34 is divided by resistors 42 and 43, one divisional voltage serving as the other input to the comparator circuit 41.

The waveform of the voltage thus divided by the divider resistors 42 and 43 and appearing at a connecting point 44 is as shown in Fig. 4(2). The zener voltage of the zener diode 39 is shown by the reference character VZ1 in Fig. 4(2). The comparator circuit 41 is adapted to maintain a line 45 at high level for the period during which the voltage at the connecting point 44 exceeds the zener voltage VZ1, while for the remaining period it maintains the line at low level by grounding it. The waveform on the line 45 is shown in Fig. 4(3).

Connected between the line 33 and a line 63 to be described later are a resistor 46 and a diode 47, and the output at their connecting point 48 is fed to the RMS value detecting circuit 49. In the RMS value detecting circuit 49, the output signal from the connecting point 48 charges a capacitor 52 through diodes 50 and 51. The RMS value detecting circuit 49 functions to produce a DC voltage which is proportional to the AC voltage impressed on the exposure lamp 1. The RMS value detecting circuit 49 transfers its output to a line 54, from which it is transferred to a line 57 through a resistor 55 and a diode 56.

The line 57 is connected to a line 45 through a diode 58. This line 57 is connected to a connecting point 61 between a resistor 59 and a capacitor 60 which are connected between the lines 32 and 37. The voltage waveform at the connecting point 61 is as shown in Fig. 4(4). When the line 45 assumes its low level, this connecting point 61 allows the capacitor 60 to discharge until its voltage is zero. When the line 45 assumes its high level, the capacitor 60 increases its output gradually with time. The electric discharge due to the diode 58 stops, whereupon the capacitor 60 is rapidly charged with a voltage which is in agreement with the RMS voltage from the resistor 55 and diode 56, and then the capacitor 60 is gradually charged through a resistor 59, so that its output voltage increases with time.

A comparator circuit 62 receives at its one input the output signal at the connecting point 61 and at its other input the Zener voltage VZ1 at the connecting point 40. As a result, the comparator circuit 62 renders the line 63a high level for the period during which the voltage at the connecting point 61 exceeds the Zener voltage VZ1. When the line 63 is at low level, the diode 47 is rendered conductive, while when it is at high level, the diode 47 is cut off, so that the output at the connecting point 48 is given to the RMS value detecting circuit 49. The signal from the line 63, shown in Fig. 4(5), is differentiated by a differentiating capacitor 64, and the resulting differentiated pulses, as shown in Fig. 4(6), are given to the base of a transistor 65. The transistor 65 is series-connected to the primary winding of the pulse transformer 28, the output signal from the secondary winding being used for firing the triac 29.

The transistor 65 is rendered conductive, as shown in Fig. 4(7), in response to a pulse from the differentiating capacitor 64. As a result, the triac 29 is fired, whereby the voltage shown in Fig. 4(8) is impressed on the exposure lamp 1; thus the latter is controlled by the conducting time of the lamp supply power switching device.

When the output voltage of the AC source 27 varies to become, e.g., high, the voltage at the connecting point 48 rises, whereby the voltage on the line 54 lowers. As a result, the width of the pulses shown in Fig. 4(5), which are transferred to the line 63 from the comparator circuit 62, is reduced. As a result, the conducting time of the triac 29 is reduced. In this way, the light quantity of the exposure lamp 1 is maintained constant.

The output signal from the detecting element 25 is given to one input of an operational amplifier circuit 66. The other input of the operating amplifier circuit 66 is given the Zener voltage VZ1. The operational amplifier circuit 66 produces on a line 67 a voltage which corresponds to the difference between the voltage VZ1, and a voltage value which corresponds to the impedance of the detecting element 25. Therefore, if the light quantity received by the detecting element 25 increases, its impedance decreases and hence the voltage applied to the operational amplifier circuit 66 decreases. Thus, the voltage on the line 67 decreases. This voltage on the line 67 is received by an operational amplifier circuit 68 which uses it as a reference voltage. Also, the operational amplifier circuit 68 is given the voltage provided by the detecting element 21 at the connecting point 70. The operational amplifier circuit 68 produces on a line 69 a voltage corresponding to the difference between the voltage on the line 67 and the voltage corresponding to the impedance of the detecting element 21. Thus, if the quantity of light received by the light receiving element 21 increases, the voltage at the connecting point 70 decreases; therefore, unless a greater quantity of light is given to the light receiving element 21, it is impossible to deliver a signal of the same level as before to the line 69.

If the quantity of light received by the light receiving element 21 increases, the impedance thereof decreases, and hence the voltage on the line 69 increases. Thus, the voltage delivered to the line 54 of the RMS value detecting circuit 49 decreases. Therefore, in the comparator circuit 62, it takes a longer time for the voltage at the connecting point 61 to reach the voltage VZ1. As a result, the conducting time of the triac 29 becomes smaller and the output light quantity of the exposure lamp 1 decreases.

The function of this embodiment will be explained in more detail. Suppose again, the document is such as in Fig. 6, and the detecting element 21 forming the document density detector is detecting the spot 21a. If the document 4 is scanned and the spot 21a is moving from a bright portion of the document 4 to a dark portion, the reflected light becomes weak. This causes an increase of the impedance of the detecting element 21, and the voltage on the line 69 decreases. Then, the voltage delivered to the line 54 of the RMS value detecting circuit 49 increases, and the conducting time of the triac 29 becomes larger.

The detecting region is arranged in such a manner that it is spaced from the exposure region 18 by a distance corresponding to the relative movement within the response time of the exposure lamp 1. Accordingly, the output light quantity of the exposure lamp 1 increases at the moment when the dark portion of the document 4 reaches the exposure region 18.

At this time, the impedance of the detecting element 21 becomes higher, because the exposure lamp 1 is darkened. However, the detecting element 25 forming the lamp light quantity detector also detects the darkened exposure lamp 1 at the same instant, and the impedance of the detecting element 25 becomes higher. So, these two detections by the detecting elements 21 and 25 are mutually cancelled or compensated in the operational amplifier circuit 68, so that no stripes as in Fig. 8 appear.

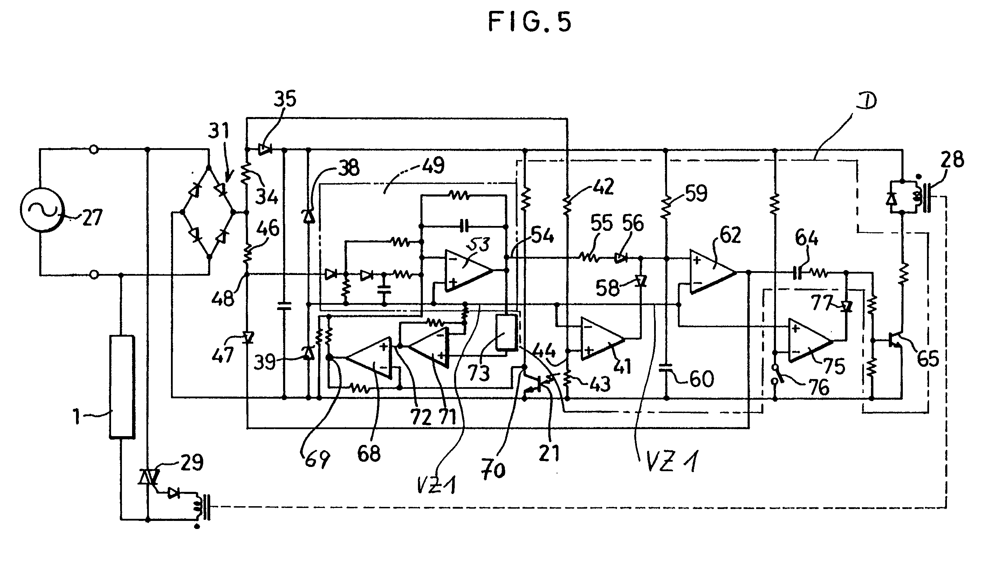

Fig. 5 is an electric circuit diagram of another embodiment of the invention. This embodiment is similar to the preceding one, wherein the corresponding components are designated by the same reference characters. What is to be noted is that there is provided a single detecting element 21, whose output signal is given to one input of the operational amplifier circuit 68. The other input of the operational amplifier circuit 68 is given the output signal from an operational amplifier circuit 71 through a line 72.

The operational amplifier circuit 71 is given a signal, delayed by a delaying circuit 73, from the line 54 of the RMS value detecting circuit 49. The delaying circuit 73 functions to delay the output signal on the line 54 by an amount corresponding to the characteristic of the exposure lamp 1. The other input of the operational amplifier circuit 71 is given the voltage VZ1. Therefore, the signal delivered from the RMS value detecting circuit 49 to the line 54 and serving to control the conducting time of the exposure lamp 1 is delayed by the delaying circuit 73, and the reference signal to be compared with the output signal from the detecting element 21 on the basis of the output signal from the delaying circuit 73 is changed. When the quantity of light from the exposure lamp 1 increases, the detecting element 21 will not operate in the same way as before unless it receives a greater quantity of light.

In addition, in the two embodiments described above, a comparator circuit 75 is installed. One input of this comparator circuit 75 is given the voltage VZ1 and the other is given a low level signal through a switch 76. During the conducting time of the triac 29 supplying power to the exposure lamp 1, the switch 76 is kept opened. When the switch 76 is closed, the output signal of the comparator circuit 75 takes the low level and hence the base of the transistor 65 is rendered low through a diode 77, with the transistor 65 remaining cut off. In this way, the exposure lamp 1 can be kept deenergized.

The present invention is applicable not only to a transfer type electrostatic copying machine in which the transparent platen 3 is movable, as described above, but also to a copying machine of the type in which the transparent platen 3 for mounting the document 4 thereon is stationary and the exposure lamp 1 is movable (in this case, the term "fowardly of the exposure region 18 of the document" means "downstream as viewed in the direction of travel of the exposure lamp 1"). The invention is also applicable to other image forming apparatus such as facsimile systems.

## Claims

1. An automatic exposure device, comprising:
   - a document platen (3) for supporting a document (4), and an exposure lamp (1) moving relatively to each other,
   - a document density detector (21) for detecting light emitted by the exposure lamp (1) and reflected from a detecting region (20) of the document (4), which detecting region (20) is spaced from an exposure region (18) of the document (4) by a distance corresponding to the relative movement within the response time of the exposure lamp (1), and
   - a lamp controller (C) the operation of which is dependent on the detected document density,
   characterized in that
   - a lamp light quantity detector (25) detects the quantity of light emitted by the exposure lamp (1),

- a reference signal generator (66, A) uses as a first input signal the output signal of the lamp light quantity detector (25) and outputs a reference signal (at 67),
- a correcting means (68, B) uses as a first input signal the reference signal (at 67) and as a second input signal the signal (at 70) produced by the document density detector (21), and
- the output signal (at 69) generated by the correcting means (68,B) controls the conducting time of a lamp supply power switching device (29) provided in the lamp controller (C).

2. The device of claim 1,
characterized in that
the reference signal (at 67) of the reference signal generator (66, A) increases when the lamp light quantity detector (25) detects a smaller amount of light emitted by the exposure lamp (1),
in that the signal (at 70) produced by the document density detector (21) increases when the document density detector (21) detects a smaller amount of light reflected from the document (4),
and in that the correcting means (68, B) delivers an output signal (at 69) based upon the difference between its first and second input signals from the reference signal generator (66, A) and the document density detector (21), respectively.

3. The device of claim 1,
characterized in that
the reference signal (at 67) of the reference signal generator (66, A) decreases when the lamp light quantity detector (25) detects a larger amount of light emitted by the exposure lamp (1),
in that the signal (at 70) produced by the document density detector (21) decreases when the document density detector (21) detects a larger amount of light reflected from the document (4),
and in that the correcting means (68, B) delivers an output signal (at 69) based upon the difference between its first and second input signals from the reference signal generator (66, A) and the document density detector (21), respectively.

4. An automatic exposure device, comprising
- a document platen (3), for supporting a document (4), and an exposure lamp (1) moving relatively to each other.
- a document density detector (21) for detecting light emitted by the exposure lamp (1) and reflected from a detecting region (20) of the document (4), which detecting region (20) is spaced from an exposure region (18) of the document (4) by a distance corresponding to the relative movement within the response time of the exposure lamp (1), and
- a lamp controller (C) the operation of which is dependent on the detected document density,
characterized in that
- a control signal (at 54) is generated, which is sampled at a time in advance of the time when the document density is detected, by an amount corresponding to the lamp response time,
- wherein the control signal is representative of the quantity of light emitted by the exposure lamp (1) at the time when the document density is detected,
- a reference signal generator (71, A) uses as a first input signal the control signal and outputs a reference signal (at 72),
- a correcting means (68, B) uses as a first input signal the reference signal (at 72) and as a second input signal the signal (at 70) produced by the document density detector (21), and
- the output signal (at 69) of the correcting means (68, B) controls the conducting time of a lamp supply power switching device (29) provided in the lamp controller (C).

5. The device of any of claims 1 to 4,
characterized in that
the reference signal generator (66, 71, A) uses as a second input signal a preset signal (VZ1) and delivers as a reference signal a signal based upon the difference between its first and second input signals.

6. The device of any of claims 1 to 5,
characterized in that
the correcting means (68, B) delivers a signal based upon the difference between its first and second input signals.

7. The device of any of claims 1 to 6,
characterized in that
an RMS value detecting circuit (49) is provided using as a first input signal a rectified power signal which is dependent on the AC voltage supplied to the exposure lamp (1), and as a second input signal the output signal (at 69) of the correcting means (68, B),
and in that the output signal of the RMS value detecting circuit (49) controls the conducting time of the lamp supply power switching device (29).

8. The device of any claims 4 to 7, characterized in that
the first input of the reference signal generator (71) is connected to a delaying circuit (73) receiving the control signal (at 54).

**Revendications**

1. Dispositif d'exposition automatique, comprenant :
   - une platine à document (3) pour supporter un document (4) et une lampe d'exposition (1) pouvant se déplacer l'une par rapport à l'autre,
   - un détecteur de la densité du document (21) pour détecter la lumière émise par la lampe d'exposition (1) et réfléchie par une région de détection (20) du document (4), laquelle région de détection (20)est espacée d'une région d'exposition (18) du document (4) d'une distance correspondant au mouvement relatif effectué pendant le temps de réponse de la lampe d'exposition (1), et
   - un dispositif de commande de la lampe (C) dont le fonctionnement dépend de la densité du document détectée,

   caractérisé en ce que :

   - un détecteur de la quantité de lumière de la lampe (25) détecte la quantité de lumière émise par la lampe d'exposition (1),
   - un générateur de signaux de référence (66,A) utilise en tant que premier signal d'entrée le signal de sortie du détecteur de la quantité de lumière de la lampe (25) et émet un signal de référence (en 67),
   - des moyens de correction (68,B) utilisent en tant que premier signal d'entrée le signal de référence (en 67) et en tant que deuxième signal d'entrée le signal (en 70) produit par le détecteur de la densité du document (21), et
   - le signal de sortie (en 69) produit par les moyens de correction (68,B) commande le temps de conduction d'un dispositif commutateur du courant d'alimentation de la lampe (29) prévu dans le dispositif de commande de la lampe (C).

2. Dispositif selon la revendication 1, caractérisé en ce que le signal de référence (en 67) du générateur de signaux de référence (66,A)-augmente lorsque le détecteur de la quantité de lumière de la lampe (25) détecte que la lampe d'exposition (1) a émis une plus faible quantité de lumière, en ce que le signal (en 70) produit par le détecteur de la densité du document (21) augmente lorsque le détecteur de la densité du document (21)détecte que laquantité de lumière réfléchie par le document (4) est plus faible, et en ce que les moyens de correction (68,B) fournissent un signal de sortie (en 69)sur la base de la différence entre son premier et son deuxième signal d'entrée en provenance respectivement du générateur de signaux de référence (66,A) et du détecteur de la densité du document (21).

3. Dispositif selon la revendication 1, caractérisé en ce que le signal de référence (en 67) du générateur de signaux de référence (66,A)-diminue lorsque le détecteur de la quantité de lumière de la lampe (25) détecte que la quantité de lumière émise par la lampe d'exposition (1) est plus forte, en ce que le signal (en 70) produit par le détecteur de la densité du document (21) diminue lorsque le détecteur de la densité du document (21) détecte que la quantité de lumière réfléchie par le document (4) est plus forte, et en ce que les moyens de correction (68,B) fournissent un signal de sortie (en 69) sur la base de la différence entre son premier signal d'entrée et son deuxième signal d'entrée en provenance respectivement du générateur de signaux de référence (66,A) et du détecteur de la densité du document (21).

4. Dispositif d'exposition automatique, comprenant :
   - une platine à document (3) pour supporter un document (4) et une lampe d'exposition (1) pouvant se déplacer l'une par rapport à l'autre,
   - un détecteur de la densité du document (21) pour détecter la lumière émise par la lampe d'exposition (1) et réfléchie par une région de détection (20) du document (4), laquelle région de détection (20)est espacée d'une région d'exposition (18) du document (4) d'une distance correspondant au mouvement relatif pendant le temps de réponse de la lampe d'exposition (1), et
   - un dispositif de commande de la lampe (C) dont le fonctionnement dépend de la densité du document détectée,

caractérisé en ce que :

- il est produit un signal de commande (en 64) qui est échantillonné à un moment précédant le moment auquel la densité du document est détectée, d'une durée correspondant au temps de réponse de la lampe,
- le signal de commande est représentatif de la quantité de lumière émise par la lampe d'exposition (1) au moment où la densité du document est détectée,
- un générateur de signaux de référence (71,A) utilise comme premier signal d'entrée le signal de commande et émet un signal de référence (en 72),
- des moyens de correction (68,B) utilisent en tant que premier signal d'entrée le signal de référence (en 72) et en tant que deuxième signal d'entrée le signal (en 70) produit par le détecteur de la densité du document (21), et
- le signal de sortie (en 69) des moyens de correction (68,B) détermine le temps de conduction d'un dispositif de commutation du courant d'alimentation de la lampe (29) prévu dans le dispositif de commande de la lampe (C).

5. Dispositif selon l'une des revendications 1 à 4, caractérisé en ce que le générateur de signaux de référence (66,-71,A) utilise comme deuxième signal d'entrée un signal prédéterminé (VZ1) et fournit comme signal de référence un signal basé sur la différence entre le premier signal d'entrée et le deuxième signal d'entrée.

6. Dispositif selon l'une des revendications 1 à 5, caractérisé en ce que les moyens de correction (68,B) fournissent un signal basé sur la différence entre leur premier signal d'entrée et leur deuxième signal d'entrée.

7. Dispositif selon l'une des revendications 1 à 6, caractérisé en ce qu'il est prévu un circuit détecteur de la valeur quadratique moyenne (49) utilisant en tant que premier signal d'entrée un signal de courant redressé qui est fonction de la tension alternative fournie à la lampe d'exposition (1) et, en tant que deuxième signal d'entrée, le signal de sortie (en 69) des moyens de correction (68,B), et en ce que le signal de sortie du circuit détecteur de la valeur quadratique moyenne (49) détermine le temps de conduction du dispositif de commutation du courant d'alimentation de la lampe (29).

8. Dispositif selon l'une des revendications 4 à 7, caractérisé en ce que la première entrée du générateur de signaux de référence (71) est raccordée à un circuit temporisateur (73) recevant le signal de commande (en 54).

**Patentansprüche**

1. Automatische Belichtungsvorrichtung, umfassend:
   - eine Dokumentenplatte (3), um ein Dokument (4) zu tragen, und eine Belichtungslampe (1), die sich relativ zueinander bewegen,
   - einen Dokumentendichtedetektor (21), um Licht zu erfassen, das von der Belichtungslampe (1) emittiert und von einem Abtastbereich (20) des Dokumentes (4) reflektiert wird, wobei der Abtastbereich (20) von einem Belichtungsbereich (18) des Dokumentes (4) um einen Abstand beabstandet ist, der der Relativbewegung innerhalb der Ansprechzeit der Belichtungslampe (1) entspricht, und
   - eine Lampensteuerung (C), deren Betrieb von der abgetasteten Dokumentdichte abhängt,
   dadurch gekennzeichnet,
   - daß ein Lampenlichtmengendetektor (25) die Menge an Licht mißt, die von der Belichtungslampe (1) emittiert wird,
   - daß ein Referenzsignalgenerator (66, A) als ersters Eingangssignal das Ausgangssignal des Lampenlichtmengendetektor (25) verwendet und ein Referenzsignal abgibt (bei 67),
   - daß eine Korrektureinrichtung (68, B) als erstes Eingangssignal das Referenzsignal (bei 67) und als zweites Eingangssignal das Signal (bei 70) verwendet, das von dem Dokumentendichtedetektor (21) erzeugt wird,
   - und daß das Ausgangssignal (bei 69), das von der Korrektureinrichtung (68, B) erzeugt wird, die Zeitdauer der Stromzuführung einer Lampenversorgungsstrom-Schalteinrichtung (29) steuert, die in der Lampensteuerung (C) vorgesehen ist.

2. Vorrichtung nach Anspruch 1,
   dadurch gekennzeichnet,
   daß das Referenzsignal (bei 67) des Referenzsignalgenerators (66, A) zunimmt, wenn der Lampenlichtmengendetektor (25) eine kleinere Menge an Licht mißt, die von der Belichtungslampe (1) emittiert wird,
   daß das Signal (bei 70), das von dem Dokumentendichtedetektor (21) erzeugt wird, zunimmt, wenn der Dokumentendichtedetektor (21) eine kleinere Menge an Licht mißt, die von dem Dokument (4) reflektiert wird,

und daß die Korrektureinrichtung (68, B) ein Ausgangssignal (bei 69) liefert, das auf der Differenz zwischen ihren ersten und zweiten Eingangssignalen von dem Referenzsignalgenerator (66, A) bzw. dem Dokumentendichtedetektor (21) basiert.

3. Vorrichtung nach Anspruch 1,
dadurch gekennzeichnet,
daß das Referenzsignal (bei 67) des Referenzsignalgenerators (66, A) abnimmt, wenn der Lampenlichtmengendetektor (25) eine größere Menge an Licht mißt, die von der Belichtungslampe (1) emittiert wird,
daß das Signal (bei 70), das von dem Dokumentendichtedetektor (21) erzeugt wird, abnimmt, wenn der Dokumentendichtedetektor (21) eine größere Menge an Licht mißt, die von dem Dokument (4) reflektiert wird,
und daß die Korrektureinrichtung (68, B) ein Ausgangssignal (bei 69) liefert, das auf der Differenz zwischen ihren ersten und zweiten Eingangssignalen von dem Referenzsignalgenerator (66, A) bzw. dem Dokumentendichtedetektor (21) basiert.

4. Automatische Belichtungsvorrichtung, umfassend:
- eine Dokumentenplatte (3), um ein Dokument (4) zu tragen, und eine Belichtungslampe (1), die sich relativ zueinander bewegen,
- einen Dokumentendichtedetektor (21), um Licht zu erfassen, das von der Belichtungslampe (1) emittiert und von einem Abtastbereich (20) des Dokumentes (4) reflektiert wird, wobei der Abtastbereich (20) von einem Belichtungsbereich (18) des Dokumentes (4) um einen Abstand beabstandet ist, der der Relativbewegung innerhalb der Ansprechzeit der Belichtungslampe (1) entspricht, und
- eine Lampensteuerung (C), deren Betrieb von der abgetasteten Dokumentdichte abhängt,
dadurch gekennzeichnet,
- daß ein Steuersignal (54) erzeugt wird, das zu einem Zeitpunkt, der um eine der Lampenansprechzeit entsprechende Zeitdauer vor dem Zeitpunkt abgetastet wird, in welchem die Dokumentdichte abgetastet wird,
- daß das Steuersignal repräsentativ ist für die Lichtmenge, die von der Belichtungslampe (1) zu dem Zeitpunkt emittiert wird, in welchem die Dokumentdichte abgetastet wird,
- daß ein Referenzsignalgenerator (71, A) als erstes Eingangssignal das Steuersignal verwendet und ein Referenzsignal (bei 72) abgibt,
- daß eine Korrektureinrichtung (68, B) als erstes Eingangssignal das Referenzsignal (bei 72) und als zweites Eingangssignal das Signal (bei 70) verwendet, das von dem Dokumentendichtedetektor (21) erzeugt wird,
- und daß das Ausgangssignal (bei 69) der Korrektureinrichtung (68) die Zeitdauer der Stromzuführung einer Lampenversorgungsstrom-Schalteinrichtung (29) steuert, die in der Lampensteuerung (C) vorgesehen ist.

5. Vorrichtung nach einem der Ansprüche 1 bis 4,
dadurch gekennzeichnet,
daß der Referenzsignalgenerator (66, 71, A) als zweites Eingangssignal ein Vorwählsignal (VZ1) verwendet und als Referenzsignal ein Signal liefert, das auf der Differenz zwischen seinen ersten und zweiten Eingangssignalen basiert.

6. Vorrichtung nach einem der Ansprüche 1 bis 5, dadurch gekennzeichnet, daß die Korrektureinrichtung (68, B) ein Signal liefert, das auf der Differenz zwischen ihren ersten und zweiten Eingangssignalen basiert.

7. Vorrichtung nach einem der Ansprüche 1 bis 6,
dadurch gekennzeichnet,
daß eine Abtastschaltung (49) für den quadratischen Mittelwert vorgesehen ist, die als erstes Eingangssignal ein gleichgerichtetes Spannungssignal, das von der der Belichtungslampe (1) zugeführten Wechselspannung abfängt, und als zweites Eingangssignal das Ausgangssignal (bei 69) der Korrektureinrichtung (68, B) verwendet,
und daß das Ausgangssignal der Abtastschaltung (49) für den quadratischen Mittelwert die Zeitdauer der Stromzuführung der Lampenversorgungsstrom-Schalteinrichtung (29) steuert.

8. Vorrichtung nach einem der Ansprüche 4 bis 7,
dadurch gekennzeichnet,
daß der erste Eingang des Referenzsignalgenerators (71) an eine Verzögerungsschaltung (73) angeschlossen ist, die das Steuersignal

(bei 54) erhält.

# FIG.1

# FIG. 2

EP 0 133 319 B1

FIG. 3

# FIG.4

(1)

(2)

VZ1

(3)

(4)

(5)

(6)

(7)

(8)

FIG.5

## F I G.6

### (a)

### (b)

## FIG.7

(1)

(2)

(3)

## FIG.8

24́  23́  24́  23́